# EUROPÄISCHE PATENTSCHRIFT

(11) **EP 0 650 337 B1**
(45) Veröffentlichungstag und Bekanntmachung des Hinweises auf die Patenterteilung: **27.11.1996**
(21) Anmeldenummer: 93915752.5
(22) Anmeldetag: 30.06.1993
(51) Int. Cl.: A46B 7/04, A61C 17/34

(54) **BÜRSTENHALTER FÜR EINE ZAHNBÜRSTE**
TOOTHBRUSH HOLDER
SUPPORT DE BROSSE A DENTS

(30) Priorität: 15.07.1992 DE 4223196
(43) Veröffentlichungstag der Anmeldung: 03.05.1995
(73) Patentinhaber: Braun Aktiengesellschaft, 60326 Frankfurt am Main (DE)
(72) Erfinder: BOLAND, Bernhard, D-60385 Frankfurt (DE)
(86) Internationale Anmeldenummer: EP9301685
(87) Internationale Veröffentlichungsnummer: WO9402047

(56) Entgegenhaltungen:
- WO-A-93/05679
- US-A- 4 780 923

## Beschreibung

Die Erfindung betrifft einen Bürstenhalter für eine Zahnbürste, insbesondere zum Reinigen der Interdentalräume, zum lösbaren Festlegen einer Bürste, die bevorzugt aus einem insbesondere schaftförmigen Borstenträger und daran fixierten Borsten besteht, wobei der Borstenträger einen unbeborsteten Abschnitt und der Bürstenhalter ein Aufnahmemittel aufweist, in das der Abschnitt einbringbar ist.

Aus der US 4 780 923 A ist ein Bürstenhalter für Interdentalbürsten bekannt, der als Handgriff ausgebildet ist. Am oberen Ende des Griffes befindet sich ein Querloch zur Aufnahme des Borstenträgerschaftes der Interdentalbürste. Über einen drehbar am Handgriff angeordneten Schenkel wird der Borstenträgerschaft im Winkel Von ca. 90° gebogen, wobei er in einer Längsnut im Handgriff aufgenommen wird. Der Schenkel überdeckt den Schaft des Borstenträgers, wobei er in einer Ausführung eine Rasthilfe aufweist, die in eine Vertiefung am Haltegriff einrasten kann. Dadurch wird der Schaft des Borstenträgers klemmend festgelegt. Durch die Abwinklung des Schaftes im rechten Winkel entsteht insbesondere bei rotierend/oszillierend angetriebenen Bürsten eine Biegebelastung in dem abgewinkelten Bereich. Eine Übertragung dieser Bürstenanordnung auf eine elektrisch rotierende oder oszillierende Zahnbürste ist ohne weiteres nicht möglich.

Eine elektrisch rotierende Zahnbürste, die eine auswechselbare Bürste aufweist, ist aus DE 90 142 71 U1 bekannt. Diese Zahnbürste ist zur Reinigung festehender Zahnspangen und insbesondere der Zahnzwischenflächen vorgesehen. Die Zahnbürste besteht aus einem Bürstengriffteil mit Elektromotor, an welchem eine Antriebswelle angeschlossen ist, die in einer Führung zum Endteil des Bürstengriffteiles führt. Über ein Getriebe wird die Bewegung auf eine Wellendstück übertragen, welches in einem Ansatzstück zur Aufnahme der Bürste endet. Das Ansatzstück soll eine Steck-, Klemm- oder Gewindeverbindung für die Bürste ermöglichen. Der Aufbau und die Funktionsweise der erwähnten Verbindungen sind aus der Beschreibung nicht zu entnehmen.

Der Erfindung liegt das Hauptproblem zugrunde, einen Bürstenhalter zu schaffen, mit dem eine Interdentalbürste sicher, aber auswechselbar, festlegbar ist. Nach einem untergeordneten Aspekt der Erfindung soll der Bürstenhalter insbesondere bei einer elektrisch rotierenden oder oszillierenden Zahnbürste einsetzbar sein.

Diese Aufgabe wird im wesentlichen durch einen Bürstenhalter mit den eingangs genannten Merkmalen dadurch gelöst, daß der Bürstenhalter in etwa scheibenförmig ausgebildet ist, dem Aufnahmemittel eine Ausnehmung zugeordnet und in der Ausnehmung eine Klemmelement zur klemmenden lösbaren Festlegung der Bürste am Bürstenhalter schwenkbar gelagert ist. Die scheibenförmige Ausbildung des Bürstenhalters ist insbesondere deshalb von Vorteil, da aufgrund der im wesentlichen geschlossenen Form Verletzungen im Mund- sowie Zahnfleischbereich bei Benutzung der Zahnbürste ausgeschlossen werden können. Die Verwendung eines Klemmelementes gestattet eine lösbare Festlegung der Bürste am Borstenträger, ohne daß die Funktionsweise der Bürste beeinträchtigt wird.

Von Vorteil weist das Klemmelement eine Schwenkachse auf, die parallel zu einer Mittelachse des Aufnahmemittels angeordnet ist. Dadurch kann die Krafteinwirkung des Klemmelementes auf den schaftförmigen Borstenträger rechtwinklig erfolgen, wodurch selbst bei relativ geringem Krafteinsatz ein hoher Wirkungsgrad und eine sichere, klemmende Festlegung der Bürste erreicht wird. Darüber hinaus kann gegenüber Bürsten, deren Borstenträgerschaft zwecks Fixierung am Bürstenhalter im rechten Winkel geknickt wird, die Bruchgefahr erheblich verringert bzw. gänzlich vermieden werden.

Dadurch, daß die Ausnehmung in einem Abschnitt des Aufnahmemittels mündet und das Aufnahmemittel benachbart zu diesem Abschnitt eine Erweiterung aufweist, kann der schaftförmige Borstenträger bei Einwirkung des Klemmelementes in die Erweiterung ausweichen und wird leicht verformt. Diese Verformung bewirkt eine Sicherung gegen Herausfallen bzw. ungewolltes Herausziehen der Bürste während der Benutzung.

Die Ausbildung des Aufnahmemittels als Bohrung ermöglicht vorteilhafterweise eine exakte Aufnahme und Führung des schaftförmigen Borstenträgers.

Dadurch, daß die Bohrung einen geringfügig größeren Durchmesser aufweist als der schaftförmige Borstenträger, kann ein zusätzliches Festklemmen des Borstenträgers in der Bohrung bereits durch ein benutzungsbedingtes geringfügiges Aufdrehen des drahtgewundenen Schaftes erfolgen.

Von Vorteil weist der Bürstenhalter eine Oberseite mit einer kegelstumpfförmigen Erhebung auf, in deren Mitte die Bohrung angeordnet ist. Diese Erhebung dient der Fixierung des schaftförmigen Borstenträgers in Achsmitte und ermöglicht eine längere Führung.

In einer Weiterbildung weist die Bohrung eine Eintrittsöffnung mit einer Ansenkung auf, wodurch beim Bürstenwechsel die Montage für den Benutzer erleichtert und somit die Handhabung vereinfacht wird.

Bedingt dadurch, daß die Schwenkachse des Klemmelementes seitlich versetzt zu einer Längsmittelebene des Bürstenhalters angeordnet ist, erzeugt die Drahtrückstellkraft über einen Hebelarm, der zwischen einer Wirkungslinie der Kraft und der Schwenkachse gebildet wird, ein Dremoment, welches in Schließrichtung des Spannhebels wirkt. Diese Anordnung gewährleistet, daß keine ungewollte Öffnung des Spannhebels während der Benutzung der Zahnbürste erfolgt.

Von Vorteil ist das Klemmelement im wesentlichen als hakenförmiger Spannhebel ausgebildet und weist an einem Hakenende einen nasenförmigen Abschnitt auf, wodurch der Abschnitt des Borstenträgers, auf den der nasenförmige Abschnitt einwirkt, aus seiner Position verdrängt und leicht verformt wird. Die Verformung ist dabei kurbelwellenartig, ohne größere Abwinklungen oder Biegungen.

In einer Weiterbildung der Erfindung ist der Bürstenhalter rotierend oder oszillierend antreibbar und weist eine Drehachse auf, die mit der Mittelachse des Aufnahmemittels im wesentlichen zusammenfällt. Damit wird eine Verwendung von Interdentalbürsten auch für elektrisch angetriebene Zahnbürsten möglich, wobei die Übereinstimmung von Drehachse und Mittelachse des Aufnahmemittels eine mittige Anordnung des Aufnahmemittels auf dem Bürstenhalter und damit eine Zentrierung der Bürste bewirkt.

In vorteilhafter Ausbildung ist der Bürstenhalter im wesentlichen rotationssymmetrisch ausgebildet, wodurch ein gleichmäßiger und ruhiger Lauf der Bürste bei rotierendem oder oszillierendem Antrieb gewährleistet ist. Darüberhinaus werden durch diese Formgebung Verletzungen bei der Benutzung der Zahnbürste vermieden.

In einer Weiterbildung weisen die Ausnehmung und das Klemmelement im wesentlichen übereinstimmende Längen- und Breitenmaße auf, wodurch das Klemmelement nahezu vollständig in der Ausnehmung aufgenommen werden kann. Damit wird jegliche Verletzungsgefahr durch eventuell über den Bürstenhalter hinausragende Teile vermieden.

Nach einem Merkmal der Erfindung ist zwischen einem Hakenende des Spannhebels und dem Bürstenhalter eine Aussparung ausgebildet. Diese ermöglicht den manuellen Eingriff zur Betätigung des Klemmelementes und vereinfacht die Handhabung der Zahnbürste bei einem Wechsel der Bürsten.

Weitere Merkmale, Vorteile und Anwendungsmöglichkeiten der Erfindung ergeben sich aus der nachfolgenden Beschreibung des Ausführungsbeispiels, das in den Zeichnungen näher dargestellt ist. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen und deren Rückbeziehung. Es zeigen:
- Fig. 1: eine schematische Darstellung einer elektrischen Zahnbürste in Seitenansicht,
- Fig. 2: eine Interdentalbürste vor dem Festlegen am Bürstenhalter,
- Fig. 3: eine Interdentalbürste nach dem Festlegen am Bürstenhalter,
- Fig. 4: einen Längsschnitt eines Bürstenhalters ohne Klemmelement,
- Fig. 5: eine Seitenansicht eines Bürstenhalters mit schaftförmigen Borstenträger,
- Fig. 6: eine Schnittdarstellung eines Bürstenhalters gemäß I - I in Figur 4 mit Klemmelement.

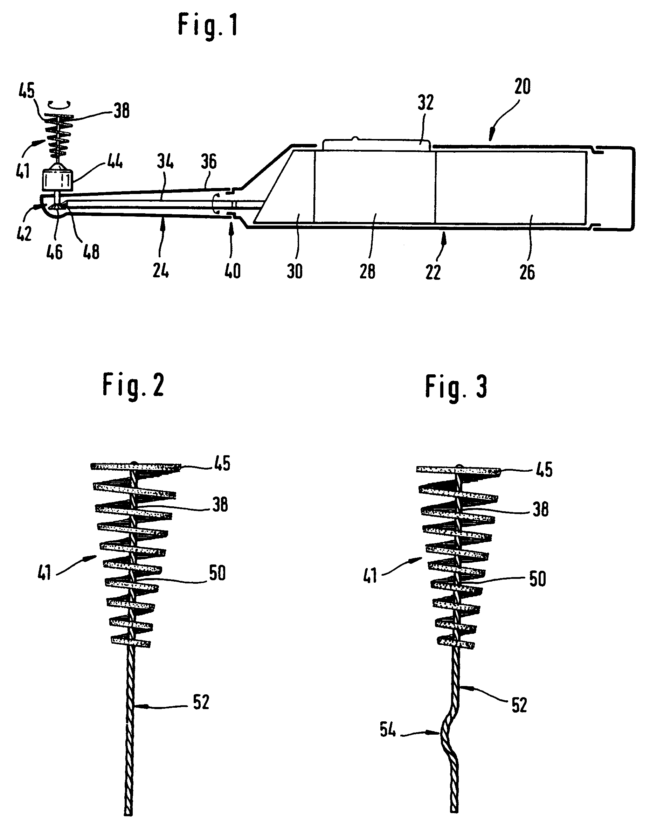

In der Figur 1 ist mit der Bezugsziffer 20 eine elektrische Zahnbürste bezeichnet. Die Zahnbürste 20 besteht aus einem Griffteil und einem daran ankuppelbaren Bürstenteil 24. Das Griffteil 22 nimmt einen Akkumulator 26 oder auch eine Batterie auf. Weiterhin ist in dem Griffteil ein Elektromotor 28 und eine Umsteuerungseinrichtung 30 zur Umsetzung der kontinuierlichen Rotationsbewegung des Elektromotors in eine alternierende Drehbewegung angeordnet. Am Griffteil 22 ist außen ein Schalter 32 zur Aktivierung der Zahnbürste 20 angebracht. Das Bürstenteil 24 weist ein hohles Trägerrohr 36 auf, welches eine Welle 34 aufnimmt. Das Trägerrohr 36 und die Welle sind über eine nicht näher dargestellte Kupplung 40 mit dem Griffteil 22 verbindbar. An dem dem Griffteil 22 abgewandten Ende des Bürstenteils 24 ist eine Bürste 41 angeordnet, die an einem Bürstenhalter 44 festgelegt ist. Die Bürste 41 weist als Borstenträger einen stabförmigen Schaft 38 auf, von dem sich Borsten 45 in radialer Richtung und umfangsmäßig verteilt erstrecken. Diese umfangsmäßige Verteilung muß selbstverständlich keine Gleichverteilung sein. Die Borsten können bezüglich des Umfanges natürlich auch Verteilungsschwerpunkte aufweisen, so daß die Beborstung wechselweise dichter oder weniger dicht ist. Der Bürstenhalter 44 wird über ein Kegelradgetriebe 42 von der Welle 34 in eine alternierende Drehbewegung versetzt. Hierzu wirkt eine am Fuße des Bürstenhalters 44 angeordnete Kegelradverzahnung 46 mit einem am Kopfende der Welle 34 vorgesehenen Kegelradsegment 48 zusammen.

Die Drehachse des Bürstenhalters 44 bzw. der Bürste 41 schließt mit der Drehachse der Welle 34 bzw. einer gemeinsamen Längsachse des Griffteils 22 und des Bürstenteils 24 einen im wesentlichen rechten Winkel ein. Dieser Winkel kann jedoch, ohne die Erfindung zu beschränken, auch um +/- 60° vom rechten Winkel abweichen. Der vom Bürstenhalter 44 bzw. der Bürste 41 überstrichene Drehwinkelbereich kann Werte im Bereich zwischen +/- 20° und +/- 100° annehmen. Bevorzugt wird jedoch ein Wert im Bereich von etwa +/- 35° +/- 5°. Diese Zahnbürste der Fig. 1 ist im einzelnen in der internationalen Patentanmeldung mit der Veröffentlichungs-Nr. WO 91/07116 (entspricht US-SN 07/855,640) der Anmelderin beschrieben, deren Inhalt durch ausdrücklichen Verweis in den Offenbarungsgehalt der vorliegenden Anmeldung aufgenommen wird.

Eine Interdentalbürste im unverformten Zustand, also vor dem Festlegen am Bürstenhalter, weist einen geradlinig ausgebildeten schaftförmigen Borstenträger 38 auf, der aus einem beborsteten Abschnitt 50 und einem unbeborsteten Abschnitt 52 besteht, wobei die Bürste 41 im wesentlichen in der oberen Hälfte des schaftförmigen Borstenträgers 38 mit Borsten 45, gegebenenfalls in unterschiedlicher Dichte, bestückt ist.

Nach Entnahme aus dem Bürstenhalter 44 ist der schaftförmige Borstenträger 38 in einem Abschnitt 54 kurbelwellenartig leicht verformt, jedoch ohne scharfe Biegungen oder Kanten.

Der Bürstenhalter 44 weist ein Aufnahmemittel 57 auf, welches als Bohrung 58 ausgebildet ist und dessen Mittelachse 62 mit der Drehachse 56 des Bürstenhalters 44 identisch ist. Eine Ausnehmung 60 mündet in einem Abschnitt in das Aufnahmemittel 57, welches benachbart zu diesem Abschnitt eine Erweiterung 63 aufweist. Eine parallel zur Drehachse 56 angeordnete Schwenkachse 64 dient der Aufnahme des Spannhebels 66. Die Oberseite 69 des Bürstenhalters 44 weist eine kegelstumpfförmige Erhebung 70 auf, in deren Mitte die Bohrung 58 mit einer Eintrittsöffnung 59 angeordnet ist, wobei an der Eintrittsöffnung 59 eine Ansenkung 72 ausgebildet ist. An der Unterseite 68 des Bürstenhalters 44 befindet sich eine Hülsenabschnitt 49, der zur Aufnahme eines Zapfens dient, welcher die rotierende oder oszillierende Bewegung auf den Bürstenhalter 44 überträgt. Diese Verbindung und der Antrieb sind im einzelnen in der internationalen Patentanmeldung WO 91/07116 beschrieben, auf die Bezug genommen wird.

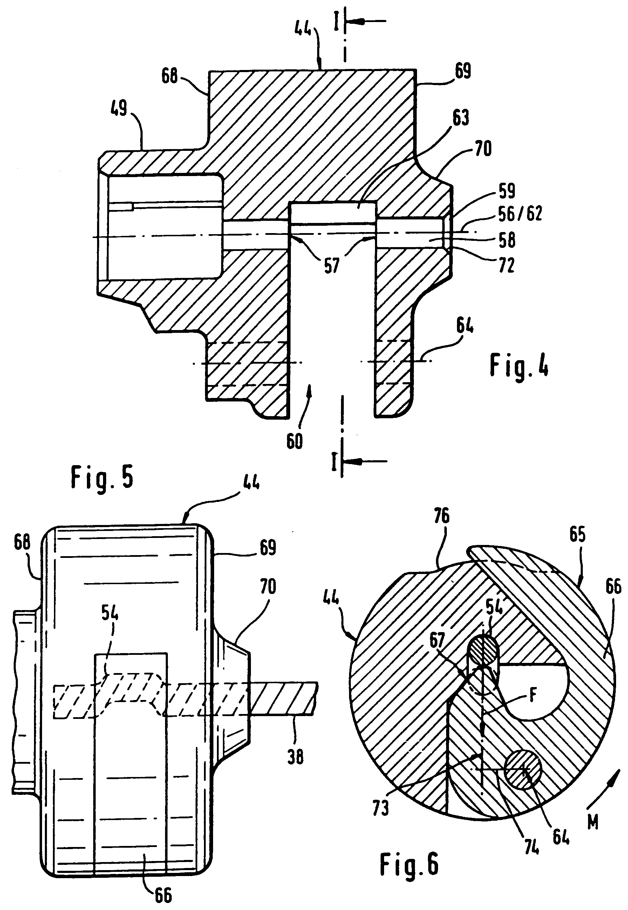

Eine Seitenansicht eines Bürstenhalters 44 zeigt Fig. 5. Im Klemmzustand ist der Spannhebel 66 in der Ausnehmung 60 aufgenommen, wobei seine Wirkung auf den schaftförmigen Borstenträger 38 durch den verformten Abschnitt 54 sichtbar wird. Dieser Formschluß zwischen Spannhebel 66 und schaftförmigen Borstenträger 38 gewährleistet neben der Sicherung gegen Herausziehen die Mitnahme der Bürste 41 bei rotierender bzw. oszillierender Bewegung des Bürstenhalters 44. Durch die Erhebung 70 wird der schaftförmige Borstenträger 38 zusätzlich geführt.

In Schließstellung des als Spannhebels 66 ausgebildeten Klemmelementes 65 hat der nasenförmige Abschnitt 67 den schaftförmigen Borstenträger 38 aus seiner Normalposition verschoben und in einem Abschnitt 54 verformt. Im Abstand zu einer Längsmittelebene des Bürstenhalters 44 ist die Schwenkachse 64 des Spannhebels 66 angeordnet. Durch die Drahtrückstellkraft F wird über den zwischen Wirkungslinie 73 der Kraft und Schwenkachse 64 gebildeten Hebelarm 74 ein Drehmoment M erzeugt, welches in Schließrichtung des Spannhebels 66 wirkt. Dadurch wird eine ungewollte Öffnung des Spannhebels 66 während der Benutzung der Zahnbürste 20 vermieden. Zur einfachen manuellen Handhabung des Spannhebels 66 ist zwischen einem Hakenende des Spannhebels 66 und dem Bürstenhalter 44 eine Aussparung 76 vorgesehen, so daß der Spannhebel in Schließstellung leicht zugänglich, aber dennoch praktisch völlig von der Ausnehmung aufgrnommen ist.

## Patentansprüche

1. Bürstenhalter (44) für eine Zahnbürste, insbesondere zum Reinigen der Interdentalräume, zum lösbaren Festlegen einer Bürste (41), die bevorzugt aus einem insbesondere schaftförmigen Borstenträger (38) und daran fixierten Borsten (45) besteht, wobei der Borstenträger (38) einen unbeborsteten Abschnitt (52) und der Bürstenhalter (44) ein Aufnahmemittel (57) aufweist, in das der Abschnitt (52) einbringbar ist, dadurch gekennzeichnet, daß der Bürstenhalter (44) in etwa scheibenförmig ausgebildet, dem Aufnahmemittel (57) eine Ausnehmung (60) zugeordnet und in der Ausnehmung (60) ein Klemmelement (65) zur klemmenden lösbaren Festlegung der Bürste (41) am Bürstenhalter (44) schwenkbar gelagert ist.

2. Bürstenhalter nach Anspruch 1, dadurch gekennzeichnet, daß das Klemmmelement (65) eine Schwenkachse (64) aufweist, die parallel zu einer Mittelachse (62) des Aufnahmemittels (57) angeordnet ist.

3. Bürstenhalter nach Anspruch 1 oder 2, dadurch gekennzeichnet, daß die Ausnehmung (60) in einen Abschnitt des Aufnahmemittels (57) mündet und das Aufnahmemittel (57) benachbart zu diesem Abschnitt eine Erweiterung (63) aufweist.

4. Bürstenhalter nach einem der Ansprüche 1 bis 3, dadurch gekennzeichnet, daß das Aufnahmemittel (57) als Bohrung (58) ausgebildet ist.

5. Bürstenhalter nach einem der Ansprüche 1 bis 4, dadurch gekennzeichnet, daß die Bohrung (58) einen geringfügig größeren Durchmesser aufweist als der schaftförmige Borstenträger (38).

6. Bürstenhalter nach einem der Ansprüche 1 bis 5, dadurch gekennzeichnet, daß der Bürstenhalter (44) eine Oberseite (69) mit einer kegelstumpfförmigen Erhebung (70) aufweist, in deren Mitte die Bohrung (58) angeordnet ist.

7. Bürstenhalter nach Anspruch 6, dadurch gekennzeichnet, daß die Bohrung (58) eine Eintritssöffnung (59) mit einer Ansenkung (72) aufweist.

8. Bürstenhalter nach einem der Ansprüche 1 bis 7, dadurch gekennzeichnet, daß die Schwenkachse (64) des Klemmelementes (65) seitlich versetzt zu einer Längsmittelebene des Bürstenhalters (44) angeordnet ist.

9. Bürstenhalter nach einem der Ansprüche 1 bis 8, dadurch gekennzeichnet, daß das Klemmelement (65) im wesentlichen als hakenförmiger Spannhebel (66) ausgebildet ist und an einem Hakenende einen nasenförmigen Abschnitt (67) aufweist.

10. Bürstenhalter nach einem der Ansprüche 1 bis 9, dadurch gekennzeichnet, daß der Bürstenhalter (44) rotierend oder oszillierend antreibbar ist und eine Drehachse (56) aufweist, die mit der Mittelachse (62) des Aufnahmemittels (57) im wesentlichen zusammenfällt.

11. Bürstenhalter nach einem der Ansprüche 1 bis 10, dadurch gekennzeichnet, daß der Bürstenhalter (44) im wesentlichen rotationssymmetrisch ausgebildet ist.

12. Bürstenhalter nach einem der Ansprüche 1 bis 11. dadurch gekennzeichnet, daß die Ausnehmung (60) und das Klemmelement (65) im wesentlichen übereinstimmende Längen- und Breitenmaße aufweisen.

13. Bürstenhalter nach einem der Ansprüche 1 bis 12, dadurch gekennzeichnet, daß zwischen einem Hakenende des Spannhebels (66) und dem Bürstenhalter (44) eine Aussparung (76) ausgebildet ist.

## Claims

1. A brush holder (44) for a toothbrush, in particular for cleaning the interproximal spaces, for releasably locating a brush (41) preferably comprising an in particular stem-shaped bristle supporting structure (38) having bristles (45) secured thereto, the bristle supporting structure (38) including a portion (52) carrying no bristles and the brush holder (44) including a receiving means (57) adapted to receive the bare portion (52), characterized in that the brush holder (44) is of an approximately disk-shaped configuration, that the receiving means (57) is associated with a recess (60), and that the recess (60) carries pivotally therein a clamping means (65) for clampingly, yet releasably, positioning the brush (41) in its proper location relative to the brush holder (44).

2. A brush holder as claimed in claim 1, characterized in that the clamping means (65) has a pivot axis (64) extending parallel to a center line (62) of the receiving means (57).

3. A brush holder as claimed in claim 1 or claim 2, characterized in that the recess (60) terminates in a section of the receiving means (57), and that the receiving means (57) includes an enlarged portion (63) adjacent to said section.

4. A brush holder as claimed in any one of the claims 1 to 3, characterized in that the receiving means (57) is configured as a bore (58).

5. A brush holder as claimed in any one of the claims 1 to 4, characterized in that the bore (58) is provided with a diameter slightly larger than that of the stem-shaped bristle supporting structure (38).

6. A brush holder as claimed in any one of the claims 1 to 5, characterized in that the brush holder (44) includes an upper end (69) having a frusto-conical projecting portion (70), with the bore (58) being arranged in the center thereof.

7. A brush holder as claimed in claim 6, characterized in that the bore (58) includes an entrance opening (59) having a countersunk portion (72).

8. A brush holder as claimed in any one of the claims 1 to 7, characterized in that the pivot axis (64) of the clamping means (65) is disposed in a laterally offset relation to a longitudinal center plane of the brush holder (44).

9. A brush holder as claimed in any one of the claims 1 to 8, characterized in that the clamping means (65) is substantially configured as a hook-shaped clamping lever (66) having at one end of the hook a nose-shaped section (67).

10. A brush holder as claimed in any one of the claims 1 to 9, characterized in that the brush holder (44) is adapted to be driven in a rotating or oscillating fashion and includes an axis of rotation (56) substantially coinciding with the center line (62) of the receiving means (57).

11. A brush holder as claimed in any one of the claims 1 to 10, characterized in that the brush holder (44) is configured so as to be essentially symmetrical about the axis.

12. A brush holder as claimed in any one of the claims 1 to 11, characterized in that the recess (60) and the clamping means (65) have essentially conforming length and width dimensions.

13. A brush holder as claimed in any one of the claims 1 to 12, characterized in that a recess (76) is provided between a hook end of the clamping lever (66) and the brush holder (44).

## Revendications

1. Support de brosse (44) pour une brosse à dents, en particulier pour le nettoyage des espaces interdentaires, pour la fixation détachable d'une brosse (41) qui est constituée de préférence d'un support de poils (38), en particulier en forme de tige, et de poils (45) qui y sont fixés, le support de poils (38) présentant un tronçon sans poil (52) et le support de brosse (44) présentant un moyen de logement (57) dans lequel peut être introduit le tronçon (52), caractérisé en ce que le support de brosse (44) est réalisé en une forme approximative de disque, en ce qu'un évidement (60) est associé au moyen de logement (57) et en ce que dans l'évidement (60), un élément de serrage (65), pour la fixation détachable et serrante de la brosse (41), est monté de façon pivotante sur le support de brosse (44).

2. Support de brosse suivant la revendication 1, caractérisé en ce que l'élément de serrage (65) présente un axe de pivotement (64) qui est agencé parallèlement à un axe médian (62) du moyen de logement (57).

3. Support de brosse suivant la revendication 1 ou 2, caractérisé en ce que l'évidement (60) débouche dans un tronçon du moyen de logement (57) et en ce que le moyen de logement (57) présente un agrandissement (63) au voisinage de ce tronçon.

4. Support de brosse suivant l'une des revendications 1 à 3, caractérisé en ce que le moyen de logement (57) est réalisé sous la forme d'un trou (58).

5. Support de brosse suivant l'une des revendications 1 à 4, caractérisé en ce que le trou (58) présente un diamètre quelque peu plus grand que celui du support de poils (38) en forme de tige.

6. Support de brosse suivant l'une des revendications 1 à 5, caractérisé en ce que le support de brosse (44) présente un côté supérieur (69) avec une bosse (70) en forme de tronc de cône et au milieu de laquelle est agencé le trou (58).

7. Support de brosse suivant la revendication 6, caractérisé en ce que le trou (58) présente une ouverture d'entrée (59) avec un chanfrein (72).

8. Support de brosse suivant l'une des revendications 1 à 7, caractérisé en ce que l'axe de pivotement (64) de l'élément de serrage (65) est agencé de façon latéralement décalée par rapport à un plan médian longitudinal du support de brosse (44).

9. Support de brosse suivant l'une des revendications 1 à 8, caractérisé en ce que l'élément de serrage (65) est réalisé sensiblement sous la forme d'un levier de serrage (66) en forme de crochet et présente à une extrémité de crochet un tronçon (67) en forme de saillie.

10. Support de brosse suivant l'une des revendications 1 à 9, caractérisé en ce que le support de brosse (44) peut être entraîné en rotation ou en oscillation et présente un axe de rotation (56) qui coïncide sensiblement avec l'axe médian (62) du moyen de logement (57).

11. Support de brosse suivant l'une des revendications 1 à 10, caractérisé en ce que le support de brosse (44) est réalisé sensiblement avec une symétrie de rotation.

12. Support de brosse suivant l'une des revendications 1 à 11, caractérisé en ce que l'évidement (60) et l'élément de serrage (65) présentent des mesures de longueur et de largeur qui coïncident sensiblement.

13. Support de brosse suivant l'une des revendications 1 à 12, caractérisé en ce qu'un creux (76) est réalisé entre une extrémité de crochet du levier de serrage (66) et le support de brosse (44).
